# EUROPÄISCHE PATENTANMELDUNG

(11) **EP 1 930 697 A2**
(43) Veröffentlichungstag der Anmeldung: **11.06.2008**
(21) Anmeldenummer: 07021060.4
(22) Anmeldetag: 27.10.2007
(51) Int. Cl.: G01C 21/36

(54) **Verfahren und Vorrichtung zur Auswahl eines Ziels, insbesondere bei einem Navigationssystem**

(30) Priorität: 08.12.2006 DE 102006057921
(71) Anmelder: Volkswagen Aktiengesellschaft, 38436 Wolfsburg (DE)
(72) Erfinder: Ebert, Andreas, 38104 Braunschweig (DE); Fliegner, Jens, 29399 Wahrenholz (DE); Wäller, Christoph, 38102 Braunschweig (DE); Bruns, Christian, 38102 Braunschweig (DE)

(57) **Zusammenfassung**

Die vorliegende Erfindung betrifft ein Verfahren zur Auswahl eines Ziels aus einer mögliche Ziele umfassenden Datenbank, bei dem aufeinander folgend alphanumerische Zeichen zur Suche des Ziels eingegeben werden, wobei nach jeder Eingabe eines Zeichens oder einer Zeichengruppe die Anzahl der zu den bereits eingegebenen Zeichen oder Zeichengruppen gehörigen Ziele und/oder die zu den bereits eingegebenen Zeichen oder Zeichengruppen gehörigen Ziele ermittelt wird/werden, die Anzahl der ermittelten Ziele und/oder der Ziele nach jeder Eingabe eines Zeichens oder einer Zeichengruppe ausgegeben wird und ein ausgegebenes Ziel ausgewählt wird. Ferner betrifft die Erfindung eine Vorrichtung zur Auswahl eines Ziels mit einem Speicher (1), in dem eine Datenbank mit möglichen Zielen gespeichert ist, und einer Eingabeeinheit (2) zur aufeinander folgenden Eingabe von alphanumerischen Zeichen zur Suche des Ziels. Die erfindungsgemäße Vorrichtung ist gekennzeichnet durch eine mit dem Speicher (1) und der Eingabeeinheit (2) gekoppelten Sucheinheit (3), mit der nach jeder Eingabe eines Zeichens oder einer Zeichengruppe die Anzahl der zu den bereits eingegebenen Zeichen oder Zeichengruppen gehörigen Ziele und/oder die zu den bereits eingegebenen Zeichen oder Zeichengruppen gehörigen Ziele ermittelbar ist/sind, und eine Ausgabeeinrichtung (4) zur Ausgabe der Anzahl der ermittelten Ziele und/oder der Ziele nach jeder Eingabe eines Zeichens oder einer Zeichengruppe, wobei ein bestimmtes Ziel aus den angezeigten Zielen mittels der Eingabeeinheit auswählbar ist.

## Beschreibung

Die vorliegende Erfindung betrifft ein Verfahren zur Auswahl eines Ziels aus einer mögliche Ziele umfassenden Datenbank. Ferner betrifft die Erfindung eine Vorrichtung zur Auswahl eines Ziels mit einem Speicher, in dem eine Datenbank mit möglichen Zielen gespeichert ist, und einer Eingabeeinheit zur aufeinander folgenden Eingabe von alphanumerischen Zeichen zur Suche des Ziels. Ferner betrifft die Erfindung die Verwendung eines solchen Auswahlverfahrens in einem Fahrzeugnavigationssystem zur Eingabe eines Ziels sowie ein Navigationssystem für ein Fahrzeug mit einer solchen Auswahlvorrichtung.

Bei bekannten Navigationssystemen ist es möglich, sowohl Adressen als auch Sonderziele (Points of Interest) als Ziele einzugeben. Mögliche Ziele mit den zugehörigen geographischen Positionen sind in einem Speicher des Navigationssystems gespeichert. Um z.B. ein Ziel in Form einer Adresse einzugeben, ist es erforderlich, zuerst die Stadt einzugeben und danach die Straße. Bei dieser Eingabe muss man üblicherweise auch mit dem ersten Teil des Straßen- bzw. Stadtnamens beginnen. Bei zusammengesetzten Straßennamen ist es nicht möglich, nur den zweiten Bestandteil des Straßennamens einzugeben. Es ist somit erforderlich, dass sich der Nutzer sehr strikt an die Strukturierung der Daten, wie sie im Speicher abgelegt sind, hält. Ferner ist es bei bekannten Navigationssystemen vielfach erforderlich, bei der Auswahl eines Sonderziels zunächst innerhalb eines Dialogs die gewünschte Kategorie des Sonderziels einzugeben. Daraufhin kann man das gewünschte Sonderziel aus einer Liste auswählen.

Aus der DE 102 44 209 A1 ist ein Navigationsverfahren und ein Navigationssystem bekannt, bei dem Zielorte zusätzlich zu ihrer jeweiligen Benennung mit wenigstens einem den Zielort beschreibenden Merkmal verzeichnet sind. Bei der Auswahl eines Ziels reicht es aus, nur dieses Merkmal einzugeben. Bei der Eingabe eines oder mehrerer den Zielort beschreibender Merkmale kann eine Freitext-Eingabe gewählt werden. Nach der Freitext-Eingabe eines Zielortes erfolgt ein Auswertevorgang, bei dem die in dem Navigationssystem gespeicherten Zielorte durchsucht werden. Der gewünschte Zielort wird dann angezeigt:

Es ist die Aufgabe der vorliegenden Erfindung, ein Verfahren und eine Vorrichtung der eingangs genannten Art bereitzustellen, mit denen ein Ziel so einfach und schnell wie möglich ausgewählt werden kann. Dabei soll der Nutzer bei den Eingaben für die Suche des Zielorts nicht an eine feste Struktur gebunden sein. Vielmehr sollte es ausreichend sein, dass nur einige Bestandteile der Beschreibung eines Ziels eingegeben werden. Außerdem soll der Nutzer nur möglichst wenige alphanumerische Zeichen eingeben müssen, um das Ziel eindeutig zu bestimmen und auszuwählen.

Diese Aufgabe wird durch ein Verfahren mit den Merkmalen des Anspruchs 1 und eine Vorrichtung mit den Merkmalen des Anspruchs 10 gelöst.

Bei dem erfindungsgemäßen Verfahren werden alphanumerische Zeichen zur Suche des Ziels aufeinander folgend eingegeben, wobei nach jeder Eingabe eines Zeichens oder einer Zeichengruppe die Anzahl der zu den bereits eingegebenen Zeichen oder Zeichengruppen gehörigen Ziele und/oder die zu den bereits eingegebenen Zeichen oder Zeichengruppen gehörigen Ziele ermittelt wird/werden. Die Anzahl der ermittelten Ziele und/oder die Ziele werden nach jeder Eingabe eines Zeichens oder einer Zeichengruppe ausgegeben und ein ausgegebenes Ziel wird ausgewählt.

Die Ausgabe des Ziels erfolgt insbesondere durch eine entsprechende Anzeige mittels einer Anzeigevorrichtung. Es wird somit die Anzahl der ermittelten Ziele bzw. Textinformation zu den Zielen selbst angezeigt.

Bei einem Ziel handelt es sich im Sinne der Erfindung um irgendeinen gewünschten Eintrag in der Datenbank. Bei einem Ziel kann es sich jedoch insbesondere um eine bestimmte geographische Position handeln, die in der Datenbank mit verschiedenen alphanumeris'chen Bezeichnungen verknüpft ist. Es kann sich bei dem Ziel um den Endpunkt einer gewünschten Fahrt in einem Kraftfahrzeug handeln. Es kann sich jedoch auch um ein Objekt bei einer bestimmten geographischen Position handeln, zu dem ein Nutzer weitere Informationen erhalten will.

Bei dem erfindungsgemäßen Verfahren wird bereits nach jeder Eingabe eines Zeichens oder einer Zeichengruppe die aktuelle Anzahl der möglichen Ziele sowie gegebenenfalls die Ziele selbst oder eine Teilmenge der ermittelten Ziele angezeigt. Diese Anzeige ermöglicht es dem Nutzer, ein bestimmtes Ziel durch die Eingabe möglichst weniger Zeichen eindeutig zu bestimmen.

Gemäß einer bevorzugten Ausgestaltung des erfindungsgemäßen Verfahrens wird nach jeder Eingabe eines Zeichens oder einer Zeichengruppe zunächst die Anzahl der zu dem bereits eingegebenen Zeichen gehörigen Ziele ermittelt und die ermittelte Anzahl ausgegeben, d.h. insbesondere angezeigt, wenn sie größer als oder gleich einem Grenzwert ist. Wenn die Anzahl der ermittelten Ziele kleiner als der Grenzwert ist, werden die zu den bereits eingegebenen Zeichen oder Zeichengruppen gehörigen Ziele ausgegeben, d.h. insbesondere angezeigt. Der Grenzwert hängt dabei von der Ausbildung der Ausgabeeinheit ab. Handelt es sich bei der Ausgabeeinheit um eine Anzeigeeinheit, hängt der Grenzwert von der Anzahl der Ziele ab, die in der Anzeigefläche gleichzeitig anzeigbar sind. Auf diese Weise wird dem Nutzer nach der Eingabe jedes Zeichens oder jeder Zeichengruppe aktuell angezeigt, wie viele Ziele es in der Datenbank zu den bisher eingegebenen Zeichen oder Zeichengruppen gibt. Unterschreitet die Anzahl der möglichen Ziele den Grenzwert, werden entweder alle möglichen Ziele in Form von alphanumerischen Zeichen angezeigt oder es wird sowohl die Anzahl der möglichen Ziele, als auch die alphanumerischen Zeichen zu den Zielen selbst angezeigt.

Ferner kann auch unabhängig von der Anzahl der ermittelten Ziele immer eine bestimmte Anzahl an Zielen ausgegeben werden. Wenn es sich bei der Ausgabeeinheit um eine Anzeigeeinheit handelt, hängt die Anzahl der angezeigten Ziele von der Größe der Anzeigefläche dieser Anzeigeeinheit ab. Wenn die Anzahl der ermittelten Ziele die Anzahl der ausgebbaren Ziele übersteigt, wird bevorzugt eine Bewertung der Relevanz der Ziele durchgeführt. Hierbei kann insbesondere die Entfernung der Ziele von einer bestimmten Position, insbesondere der Position eines Fahrzeugs in dem das Verfahren genutzt wird, berücksichtigt werden.

Gemäß einer weiteren bevorzugten Ausbildung des erfindungsgemäßen Verfahrens wird beim Ermitteln der zu dem bereits eingegeben Zeichen oder Zeichengruppen gehörigen Ziele eine Volltextsuche in der Datenbank durchgeführt. Hierdurch wird es dem Nutzer ermöglicht, beliebige Bestandteile der alphanumerischen Zeichen der in der Datenbank gespeicherten Information einzugeben. Er ist insbesondere nicht an eine vorgegebene Struktur für die Eingabe der Zeichen zur Suche nach den Zielen gebunden.

Die von dem erfindungsgemäßen Verfahren verwendete Datenbank umfasst insbesondere Zieladressen und Sonderzielbezeichnungen. Ferner kann die Datenbank zu jedem Ziel weitere Zusatzinformationen, wie zum Beispiel eine Kurzbezeichnung und eine Kategorie enthalten. Schließlich können die Zusatzinformationen auch vom Nutzer frei konfigurierbare Felder umfassen, über welche der Nutzer die in der Datenbank gespeicherte Information seinen individuellen Bedürfnissen anpassen kann.

Gemäß einer weiteren bevorzugten Ausgestaltung des erfindungsgemäßen Verfahrens wird die aktuelle Position ermittelt und die Art der Anzeige des Ziels erfolgt in Abhängigkeit von der ermittelten aktuellen Position. Beispielsweise kann, wenn den ermittelten Zielen geographische Positionen zugeordnet sind, der Abstand dieser Positionen zu der aktuellen Position berechnet werden und die Reihenfolge der Ziele bei der Anzeige kann sich nach dem Abstand zu der aktuellen Position richten. Mehrere Ziele können oben in einer Liste angezeigt werden und entferntere Ziele unten in einer Liste. Ferner kann die Menge der möglichen Ziele in Abhängigkeit von der ermittelten aktuellen Position eingeschränkt werden. Beispielsweise kann die Menge der möglichen Ziele auf einen bestimmten Radius um die aktuelle Position herum eingeschränkt werden. Schließlich kann unabhängig von der Bestimmung der aktuellen Position die Menge der möglichen Ziele auch in Abhängigkeit von einer den Zielen zugeordneten Kategorie eingeschränkt werden.

Das erfindungsgemäße Auswahlverfahren kann insbesondere in einem Fahrzeugnavigationssystem zur Eingabe eines Ziels verwendet werden.

Die erfindungsgemäße Vorrichtung ist gekennzeichnet durch eine mit dem Speicher und der Eingabeeinheit gekoppelten Sucheinheit, mit der nach jeder Eingabe eines Zeichens oder einer Zeichengruppe die Anzahl der zu dem bereits eingegebenen Zeichen oder Zeichengruppen gehörigen Ziele und/oder die zu den bereits eingegebenen Zeichen oder Zeichengruppen gehörigen Ziele ermittelbar ist bzw. sind und durch eine Ausgabeeinrichtung zur Ausgabe der Anzahl der ermittelten Ziele und/oder der Ziele nach jeder Eingabe eines Zeichens oder einer Zeichengruppe, wobei ein bestimmtes Ziel aus den angezeigten Zielen mittels der Eingabeeinheit auswählbar ist.

Bei der Ausgabeeinrichtung handelt es sich insbesondere um eine Anzeigeeinrichtung. Die Sucheinheit kann bevorzugt beim Ermitteln der zu den bereits eingegebenen Zeichen oder Zeichengruppen gehörigen Ziele eine Volltextsuche in der Datenbank durchführen.

Die Erfindung betrifft ferner ein Navigationssystem für ein Fahrzeug mit der erfindungsgemäßen Auswahlvorrichtung, wobei das Navigationssystem eine Positionsbestimmungseinrichtung zum Bestimmen der aktuellen Position des Fahrzeugs umfasst und wobei die Sucheinheit die Menge der möglichen Ziele in Abhängigkeit von der ermittelten aktuellen Position einschränkt.

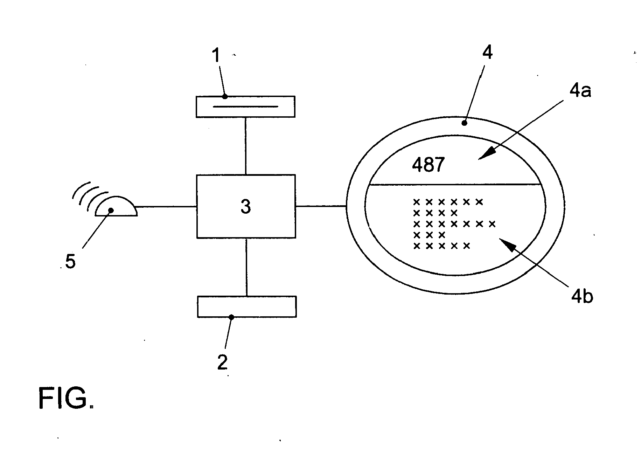

Die Erfindung wird nun anhand eines Ausführungsbeispiels mit Bezug zu der beigefügten Zeichnung erläutert. Die Figur zeigt schematisch ein Ausführungsbeispiel der erfindungsgemäßen Auswahlvorrichtung.

Die Vorrichtung umfasst einen Speicher 1, in dem eine Datenbank mit möglichen Zielen gespeichert ist. Bei der Datenbank kann es sich um eine herkömmliche Datenbank handeln, wie sie in Verbindung mit Navigationssystemen eingesetzt wird. Sie enthält geographische

Positionen, die mit bestimmten Zusatzinformationen verknüpft sind. Diese Zusatzinformationen umfassen z.B. die Adresse eines Ziels, eine Bezeichnung des Ziels, wie z.B. die Bezeichnung eines sog. Sonderziels (Point of Interest), sowie eine Kategorie und eine Kurzbezeichnung für das Ziel. Ferner kann die Datenbank auch Felder enthalten, in die der Nutzer einen beliebigen alphanumerischen Text eingeben kann.

Ferner enthält der Speicher 1 einen Volltextindex aller in der Datenbank verwendeten alphanumerischen Bezeichnungen bzw. einen Volltextindex von Teilen dieser Bezeichnungen.

Des Weiteren umfasst die Vorrichtung eine Eingabeeinheit 2. Mittels der Eingabeeinheit 2 kann der Nutzer aufeinander folgend alphanumerische Zeichen eingeben. Die Eingabeeinheit 2 kann z.B. eine Tastatur sein. Diese Tastatur kann auch von einer Anzeigeeinrichtung angezeigt werden, die in diesem Fall eine berührungsempfindliche Oberfläche zur Betätigung der angezeigten Tastatur aufweist.

Mit dem Speicher 1 und der Eingabeeinheit 2 ist eine Sucheinheit 3 gekoppelt. Die über die Eingabeeinheit 2 eingegebenen Zeichen werden an die Sucheinheit 3 übertragen.

Nach der Eingabe jedes Zeichens ermittelt die Sucheinheit 3 die Anzahl der zu den bereits eingegebenen Zeichen gehörigen Ziele. Ferner kann die Sucheinheit 3 die bereits zu den eingegebenen Zeichen gehörigen Ziele selbst ermitteln. Bei dieser Suche kann die Sucheinheit 3 auf die in dem Speicher 1 gespeicherten Daten zugreifen und eine Volltextsuche durchführen. Dabei können nicht nur mittels des Volltextindexes vollständige Bezeichnungen, wie sie in der Datenbank enthalten sind, ermittelt werden. Vielmehr ist es auch möglich, beliebige Zeichenfolgen innerhalb einzelner Bezeichnungen, z.B. einzelner Wörter, in der Datenbank zu finden.

Des Weiteren ist mit der Sucheinheit eine Anzeigeeinrichtung 4 gekoppelt, mit welcher zum einen die von der Sucheinheit 3 ermittelte Anzahl der zu den bereits eingegebenen Zeichen gehörigen Ziele in einem Bereich 4a angezeigt werden kann. Zum anderen kann in einem Bereich 4b eine Liste mit den Zielen selbst in Form von alphanumerischen Zeichen angezeigt werden. In dem in der Figur gezeigten Beispiel sind in dem Bereich 4b insgesamt 5 Ziele gleichzeitig anzeigbar.

Die Auswahl eines Ziels erfolgt wie folgt: Nachdem der Nutzer über die Eingabeeinheit 2 das erste alphanumerische Zeichen eingegeben hat, wird dieses an die Sucheinheit 3 übertragen. Die Sucheinheit 3 ermittelt daraufhin durch Zugriff auf die in dem Speicher 1 gespeicherten Daten, wie viele mögliche Ziele es zu dem ersten eingegebenen Zeichen gibt. Üblicherweise wird die Anzahl der möglichen Ziele nach der Eingabe des ersten Zeichens noch relativ groß sein. Aus diesem Grund kann eine Obergrenze für die anzuzeigende Anzahl an Zielen festgelegt sein. Wenn diese Obergrenze überschritten ist, wird in dem Bereich 4a noch keine Anzahl angezeigt. Falls die Anzahl der möglichen Ziele geringer als die Obergrenze ist, wird diese Anzahl von der Sucheinheit 3 an die Anzeigeeinrichtung 4 übertragen, bei welcher sie im Bereich 4a angezeigt wird.

Des Weiteren kann für die Zahl der in der Liste des Bereichs 4b anzeigbaren Ziele ein Grenzwert festgelegt sein. Ist die Anzahl der möglichen Ziele größer als oder gleich diesem Grenzwert, wird in der Liste des Bereichs 4b kein Ziel angezeigt. Wird der Grenzwert unterschritten, werden die alphanumerischen Bezeichnungen der Ziele selbst in dem Bereich 4b angezeigt. In dem in der Figur gezeigten Beispiel ist dieser Grenzwert 6. Erst wenn die Anzahl der möglichen Ziele weniger als 6 ist, werden die maximal 5 Ziele im Bereich 4b angezeigt.

Nach der Eingabe des ersten Zeichens wird entweder keine Anzahl an möglichen Zielen angezeigt, weil diese zu groß ist, oder es wird eine sehr große Zahl an Zielen im Bereich 4a angezeigt. Daraufhin gibt der Nutzer ein weiteres Zeichen ein. Die Sucheinheit 3 ermittelt nun erneut die Anzahl der möglichen Ziele, die die ersten beiden angegebenen Zeichen enthalten und zeigt diese mittels der Anzeigeeinrichtung 4 im Bereich 4a an, sofern die Obergrenzen nicht überschritten ist. Der Nutzer gibt nun über die Eingabeeinheit 2 aufeinander folgend weitere alphanumerische Zeichen ein. Nach jeder Eingabe eines Zeichens verringert sich die Anzahl der möglichen Ziele, die im Bereich 4a angezeigt wird, bis sie den Grenzwert unterschreitet und die Ziele selbst im Bereich 4b angezeigt werden. Sobald die Ziele selbst angezeigt werden, kann der Nutzer entweder weitere alphanumerische Zeichen eingeben, um die Menge der möglichen Ziele weiter einzuschränken oder er kann über die Eingabeeinheit 2 eines der angezeigten Ziele auswählen. Die Auswahl erfolgt spätestens dann, wenn die Sucheinheit 3 zu der aufeinander folgenden Eingabe der Zeichen nur noch ein Ziel ermittelt hat.

Ermittelt die Sucheinheit 3 zu den eingegebenen Zeichen kein mögliches Ziel, wird dem Nutzer diese Information, z.B. auch über die Anzeigeeinrichtung 4, ausgegeben, woraufhin dieser seine Eingabe z.B. durch Rücknahme der letzten Zeichen korrigieren kann.

Es ist somit möglich, dass der Nutzer bei der Suche nach einer bestimmten Adresse nur Teile eines Straßennamens oder Teile der zu dem Ziel gehörigen Zusatzinformationen eingibt.

Anstatt nach jeder Eingabe eines Zeichens die Anzahl der zu den bereits eingegebenen Zeichen gehörigen Ziele und die Ziele selbst zu ermitteln, kann die Sucheinheit 3 auch nach jeder Eingabe einer Zeichengruppe diese Anzahl und diese Ziele ermitteln. Einzelne Zeichengruppen können durch bestimmte Trennzeichen, wie z.B. ein Leerzeichen oder einen Punkt, voneinander getrennt werden. Die Gruppen sind bei der Suche dann mit einem logischen UND miteinander verknüpft. In diesem Fall kann über den Volltextindex ein mögliches Ziel sehr schnell ermittelt und in der Anzeigeeinrichtung 4 angezeigt werden.

Ferner besteht die Möglichkeit, dass der Nutzer vor der eigentlichen Eingabe die Suche auf bestimmte Felder der Datenbank einschränkt. Beispielsweise kann er vorab angeben, ob er nach Adressen, nach Sonderzielen oder nach beidem suchen möchte. Des Weiteren kann vorab eine bestimmte Kategorie für die Suche festgelegt werden.

Des Weiteren umfasst die Vorrichtung eine Positionsbestimmungseinrichtung 5, mit welcher die aktuelle Position bestimmt werden kann. Die Vorrichtung kann beispielsweise Teil eines Navigationssystems für ein Fahrzeug sein, die mit einer satellitengestützten Positionsbestimmungseinrichtung 5 ausgestattet ist. Die aktuelle Position wird von der Positionsbestimmungseinrichtung 5 fortwährend an die Sucheinheit 3 übertragen. Enthält die in dem Speicher 1 gespeicherte Datenbank geographische Positionen zu den Zielen, kann die Sucheinheit 3 sowohl die Suche als auch die Anzahl der auf der Anzeigeeinrichtung 4 angezeigten Information von der ermittelten aktuellen Position abhängig machen. Beispielsweise kann die Menge der möglichen Ziele auf einen bestimmten Radius um die aktuelle Position herum eingeschränkt werden. Ferner kann bei der Suche nur das nächstgelegene Ziel berücksichtigt werden. Wenn der Nutzer beispielsweise nach einer Apotheke sucht und diese Kategorie über die Eingabeeinheit 2 eingibt, ermittelt die Sucheinheit 3 bei dieser Kategorie nur die nächstgelegene Apotheke und zeigt sie in der Anzeigeeinrichtung 4 an. Bei anderen Kategorien kann die Suche auf eine bestimmte Anzahl der nächstgelegenen Ziele eingeschränkt werden. Außerdem kann die Anzahl der möglichen Ziele von Unterkategorien abhängen. Sucht der Nutzer z.B. nach einem Arzt, kann von jeder Art Arzt der nächstgelegene angezeigt werden.

Schließlich kann die Sucheinheit 3 bei der Freitextsuche nach Zielen auch ähnlich klingende, aber anders geschriebene Begriffe ermitteln und in die Menge der möglichen Ziele aufnehmen.

Einem weiteren Ausführungsbeispiel werden unabhängig von der Anzahl der ermittelten Ziele im Bereich 4b der Anzeigeeinrichtung 4 immer mögliche Ziele angezeigt. Übersteigt die Anzahl der ermittelten Ziele die Anzahl der in dem Anzeigebereich 4b darstellbaren Ziele, wird eine Teilmenge aus den ermittelten Zielen für die Anzeige ausgewählt. Hierbei wird die Relevanz der ermittelten Ziele bewertet und es werden nur die für den Nutzer relevantesten Ziele angezeigt. Die Relevanz eines Ziels kann von seiner Kategorie abhängen. Ferner kann die Relevanz von der aktuellen Entfernung vom Fahrzeug abhängen. Des Weiteren können bei der Bewertung der Relevanz Kontextdaten berücksichtigt werden, die in dem Fahrzeug gewonnen werden.

### Bezugszeichenliste

- 1: Speicher
- 2: Eingabeeinheit
- 3: Sucheinheit
- 4: Anzeigeeinrichtung
- 4a: Bereich zur Anzeige der Anzahl der möglichen Ziele
- 4b: Bereich für die Anzeige der Ziele
- 5: Positionsbestimmungseinrichtung

## Patentansprüche

1. Verfahren zur Auswahl eines Ziels aus einer mögliche Ziele umfassenden Datenbank, umfassend die folgenden Schritte:
- aufeinander folgende Eingabe von alphanumerischen Zeichen zur Suche des Ziels, wobei nach jeder Eingabe eines Zeichens oder einer Zeichengruppe die Anzahl der zu den bereits eingegebenen Zeichen oder Zeichengruppen gehörigen Ziele und/oder die zu den bereits eingegebenen Zeichen oder Zeichengruppen gehörigen Ziele ermittelt wird/werden,
- Ausgeben der Anzahl der ermittelten Ziele und/oder der Ziele nach jeder Eingabe eines Zeichens oder einer Zeichengruppe und
- Auswählen eines ausgegebenen Ziels.

2. Verfahren nach Anspruch 1,
**dadurch gekennzeichnet,**
**dass** nach jeder Eingabe eines Zeichens oder einer Zeichengruppe zunächst die Anzahl der zu den bereits eingegebenen Zeichen oder Zeichengruppen gehörigen Ziele ermittelt wird und die ermittelte Anzahl ausgegeben wird, wenn sie größer als oder gleich einem Grenzwert ist, und, wenn die Anzahl der ermittelten Ziele kleiner als der Grenzwert ist, die zu den bereits eingegebenen Zeichen oder Zeichengruppen gehörigen Ziele ausgegeben werden.

3. Verfahren nach Anspruch 1 oder 2,
**dadurch gekennzeichnet,**
**dass** beim Ermitteln der zu den bereits eingegebenen Zeichen oder Zeichengruppen gehörigen Ziele eine Volltextsuche in der Datenbank durchgeführt wird.

4. Verfahren nach einem der vorstehenden Ansprüche,
**dadurch gekennzeichnet,**
**dass** die Datenbank Zieladressen und Sonderzielbezeichnungen umfasst.

5. Verfahren nach einem der vorstehenden Ansprüche,
**dadurch gekennzeichnet,**
**dass** die Datenbank zu einem Ziel weitere Zusatzinformationen enthält.

6. Verfahren nach einem der vorstehenden Ansprüchen,
**dadurch gekennzeichnet,**
**dass** die aktuelle Position ermittelt wird und die Art der Anzeige der Ziele in Abhängigkeit von der ermittelten aktuellen Position erfolgt.

7. Verfahren nach einem der vorstehenden Ansprüche,
**dadurch gekennzeichnet,**
**dass** die aktuelle Position ermittelt wird und die Menge der möglichen Ziele in Abhängigkeit von der ermittelten aktuellen Position eingeschränkt wird.

8. Verfahren nach einem der vorstehenden Ansprüche,
**dadurch gekennzeichnet,**
**dass** die Menge der möglichen Ziele in Abhängigkeit von einer den Zielen zugeordneten Kategorie eingeschränkt wird.

9. Verwendung des Auswahlverfahrens nach einem der Ansprüche 1 bis 8 in einem Fahrzeugnavigationssystem zur Eingabe eines Ziels.

10. Vorrichtung zur Auswahl eines Ziels mit
- einem Speicher (1), in dem eine Datenbank mit möglichen Zielen gespeichert ist, und
- einer Eingabeeinheit (2) zur aufeinander folgenden Eingabe von alphanumerischen Zeichen zur Suche des Ziels,
**gekennzeichnet durch**
- eine mit dem Speicher (1) und der Eingabeeinheit (2) gekoppelten Sucheinheit (3), mit der nach jeder Eingabe eines Zeichens oder einer Zeichengruppe die Anzahl der zu den bereits eingegebenen Zeichen oder Zeichengruppen gehörigen Ziele und/oder die zu den bereits eingegebenen Zeichen oder Zeichengruppen gehörigen Ziele ermittelbar ist/sind, und
- eine Ausgabeeinrichtung (4) zur Ausgabe der Anzahl der ermittelten Ziele und/oder der Ziele nach jeder Eingabe eines Zeichens oder einer Zeichengruppe, wobei ein bestimmtes Ziel aus den angezeigten Zielen mittels der Eingabeeinheit auswählbar ist.

11. Vorrichtung nach Anspruch 10,
**dadurch gekennzeichnet,**
**dass** die Ausgabeeinrichtung eine Anzeigeeinrichtung (4) ist.

12. Vorrichtung nach Anspruch 10 oder 11,
**dadurch gekennzeichnet,**
**dass** mit der Sucheinheit (3) beim Ermitteln der zu den bereits eingegebenen Zeichen oder Zeichengruppen gehörigen Ziele eine Volltextsuche in der Datenbank durchführbar ist.

13. Navigationssystem für ein Fahrzeug mit einer Auswahlvorrichtung nach einem der Ansprüche 10 bis 12, wobei das Navigationssystem eine Positionsbestimmungseinrichtung (5) zum Bestimmen der aktuellen Position des Fahrzeugs umfasst und wobei die Sucheinheit (3) die Menge der möglichen Ziele in Abhängigkeit von der ermittelten aktuellen Position einschränkt.
